# EUROPEAN PATENT SPECIFICATION

(11) **EP 2 526 753 B1**
(45) Date of publication and mention of the grant of the patent: **01.01.2014**
(21) Application number: 11382173.0
(22) Date of filing: 26.05.2011
(51) Int. Cl.: A01B 73/04, A01C 7/20

(54) **Toolbar for a seeder with variable interrow spacing and seeder with variable interrow spacing that includes said toolbar**
Geräteträger für eine Sämaschine mit variablem Zwischenreihenabstand sowie Sämaschine mit variablem Zwischenreihenabstand mit besagtem Geräteträger
Barre d'outils pour semoir avec espacement variable entre les rangées et semoir avec espacement variable entre les rangées incluant ladite barre d'outils

(43) Date of publication of application: 28.11.2012
(73) Proprietor: Maquinaria Agricola Solà, S.L., 08280 Calaf (ES)
(72) Inventor: Turchetto, Alfredo, 33080 ROVEREDO IN PIANO (IT)
(74) Representative: Oficina Ponti, SLP

(56) References cited:
- EP-A1- 0 428 959
- EP-A1- 1 514 465
- EP-A1- 2 030 495
- DE-A1- 4 303 101

## Description

The present invention refers to a frame for a variable pitch sowing machine and to a variable pitch sowing machine including said frame.

### BACKGROUND OF THE INVENTION

The market currently demands wider sowing machines and greater possibilities for sowing a number of rows at once. However, the road transportation demands limiting the width of the sowing machine in its transportation position to a maximum of three meters.

On the other hand, the market also demands the sowing machine to be of variable pitch, i.e. that with the same machine it can be sowed with a different distance between rows. E.g. to sow corn keeping a distance between rows of 75 cm and also beet, keeping a distance between rows of 50 cm.

To satisfy the market needs, variable pitch sowing machines have been designed, whose frame includes a chassis that can be telescopically retracted, until a width not greater than three meters. In these kinds of machines, in transportation position, all the sowing elements are placed at the central part of the frame, and in the working position, the elements are placed along said frame, keeping a preset distance among them. Such a machine is described in document EP 1 514 465.

The sowing machines described in the previous paragraph have the drawback that the number of rows that can be done at each pass is limited to the number of elements that can be housed on the extensible chassis in transportation position, for not exceeding three meters. Furthermore, in the specific case of beet seed, in which the number of sowing rows must be a multiple of six (because of the kind of sowing machines in the market), in the practice, the sowing is limited to passes of six rows, because the existing variable pitch frames do not permit to place twelve elements.

To solve this problem variable pitch sowing machines have been designed, such as those disclosed in ES2324574, comprising an additional number of external sowing elements arranged in lateral chassis that can be vertically moved to permit the road transportation of the machine.

At the working position, the external sowing elements are aligned with respect to the sowing elements of the extensible central chassis, permitting the farmer to do twelve rows at once (per pass).

However, the machines disclosed in ES2324574 have the drawback that are not adapted to sowing any kind of seed, because the position of the external sowing elements is conditioned by the position in which are placed the lateral chassis once aligned with the extensible central chassis.

Therefore, e.g. it is impossible to use the same machine for sowing twelve corn rows, with a distance between rows of 75 cm, or for sowing twelve beet rows, with a distance between rows of 50 cm, because the distance to which the lateral chassis are placed is very different in one or the other case, and it is necessary to use lateral chassis with arms of different length to adapt the machine to both kinds of sowing.

### DESCRIPTION OF THE INVENTION

The object of the present invention is to solve said drawbacks, developing a frame for a variable pitch sowing machine and a sowing machine including said frame, which can be transported with no problems and has the advantage that can be used for sowing at once twelve rows of very different seeds, such as e.g. corn, beet, sunflower, etc.

According to this object, according to a first aspect, the present invention provides a frame for a variable pitch sowing machine comprising a first chassis provided with a first plurality of sowing elements, said first chassis including at least one portion horizontally extensible from a transportation position to a working position, said frame comprising at least a second chassis provided with a second plurality of sowing elements and vertical movement means of said sowing elements from an upper transporting position to a lower working position in which the sowing elements of said second chassis are placed aligned with respect to the sowing elements of the first chassis, characterized in that said second chassis is joined to the extensible portion of said first chassis, so that said second chassis can be horizontally moved with said extensible portion to adapt the position of its elements to the kind of sowing.

The frame of the present invention has the advantage that is adapted to any kind of sowing, because the position of the external sowing elements of the second chassis can be changed horizontally, extending more or less the extensible portion of the first chassis, which is joined to the second chassis.

Actually, in the frame of the present invention, differently from the prior art frames, the second chassis can be horizontally moved to adapt the position of the external sowing elements to the kind of sowing. This way, the same frame can be used for sowing at once up to twelve rows of any kind of seed, e.g. corn seeds, keeping a distance between rows of 75 cm, or beet seeds, keeping in this case a distance between rows of 50 cm.

Thanks to this feature, the farmer can have a sowing machine that can be transported easily, it has a high performance, and it is also very versatile, because it permits to sow any kind of seed.

Preferably, said frame comprises a support structure for said second chassis associated with said extensible portion, the vertical moving means of the sowing elements being hinged to said support structure.

This support structure makes possible a secure anchoring of the second chassis and provides suitable pivoting points for the vertical moving means of the external sowing elements.

Also preferably, said vertical moving means of the external sowing elements of the second chassis include a hinged parallelogram mechanism comprising a first arm hinged at one end to said support structure and at the other end to a support piece of the elements, means for driving said arm, and a second arm hinged at one end to said support structure and at the other end to said same support piece of the elements, said second arm permitting to keep fixed the relative position of said support piece with respect to the sowing elements during the movement of said first arm, so that said sowing elements can be vertically moved keeping their horizontal position.

The hinged parallelogram mechanism is simple and occupies a little space, presenting in this case the added advantage that it can be designed with a reduced length of the arms, which permits a lower weight of the machine.

According to a preferred embodiment, said frame includes a first central chassis provided with at least two extensible portions, and two second side chassis joined each to a extensible portion of an end of said central chassis, said central chassis including at least eight sowing elements and said side chassis at least two sowing elements each.

Advantageously, said first chassis comprises a pair of extensible portions mounted at an end of said chassis, said two portions determining a fork to which is attached the support structure of said second chassis.

Therefore, the support structure of the second chassis remains fixed in a securely way to the first chassis, said fork compensating the traction stresses to which the first chassis is subjected.

According to the same embodiment, said frame comprises a first pair of extensible portions mounted at an end of a first central chassis to hold as a fork a support structure of a second side chassis, and a second pair of extensible portions at the other end of the first chassis to hold as a fork a support structure to the other second side chassis.

Advantageously, each of said extensible portions is a telescopic arm of said first chassis.

Preferably, said second chassis includes at least a guide on which a plurality of support structures of said sowing elements is mounted, and moving means of said support structures along said guide, said moving means including a worm associated to the guide that is provided with a plurality of dragging devices of said support structures.

This dragging device permits to move easily the external sowing elements of said second chassis along the guide to fix the distance between them according to the sowing type, or e.g. to adapt the distance to the wheel pitch.

Advantageously, said dragging devices comprise, for each of said sowing elements, a dragging piece integrally attached to the support structure of the sowing element and mounted movable along the worm, a dragging nut of said piece that is fitted to the worm, and locking means of said dragging nut to permit the movement of said piece when the worm is driven when the nut is locked.

Also advantageously, said locking means includes a pin associated to said dragging piece to prevent the integral rotation of the nut with the worm.

Preferably, said first chassis comprises at least one guide on which a plurality of support structures of said sowing elements are mounted, and moving means of said support structures along said guide, said moving means including a plurality of attaching struts between the elements, each of said sowing elements comprising a support piece of said struts that is attached to the support structure of said element, said struts being associated at least to a extensible portion of said chassis to be driven by said same chassis.

Advantageously, the attaching struts between elements include each a female rod movable inside a male rod of an adjacent sowing element, and a stop element of the female rod associated to the male rod to extend said female rod a preset distance according to the kind of sowing.

The attaching struts between sowing elements of the first chassis permit to extend said elements a preset distance along a guide while the telescopic arms of the chassis are extended from their transportation position to their working position.

The frame of the present invention has the added advantage that it does not require additional struts that limit the aperture length of the extensible portions of the first chassis, so that the total length of the first chassis coincides with the sum of the partial lengths that establish the attaching struts between elements. This is thanks the fame/female configuration of the struts and to the fact that said struts are mounted on a support piece that is attached to the support structure of the elements. This configuration and said support piece provide the necessary resistance to the struts for supporting the pressure of the fluid-dynamic cylinder that extends the portions, so that it is not necessary to provide additional struts for the chassis to support this pressure.

According to a preferred embodiment, said first chassis comprises for each element that is mounted on the guide, a worm that is attached to the support piece of the struts by a tightening nut, said worm being attached integrally to the support structure of the sowing element, said chassis including a rotating nut of said worm, being susceptible of moving the worm and the support structure of each element with respect to the support piece of the struts when said rotating nut drives the worm and said tightening nut is loosed.

Therefore, once the struts are extended, it is possible to move the sowing elements of the first chassis with respect to said struts to set the distance between elements.

### BRIEF DESCRIPTION OF THE DRAWINGS

For a better understanding of what has been described some drawings are attached in which, diagrammatically and only as a non-limitative example, a practical embodiment is shown.

In said drawings,

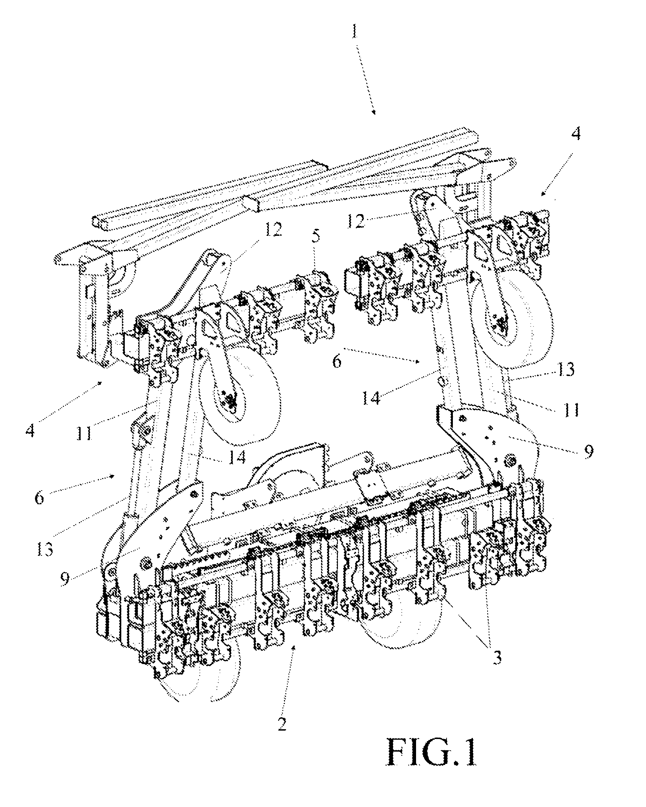

Fig. 1 shows a perspective view of a frame provided with a first central chassis and two second side chassis.
Fig. 2 is a perspective view of the central chassis of the frame of Fig. 1 showing its telescopic arms extended.
Fig. 3 is a plan view of the central chassis of Fig. 2.
Fig. 4 shows a perspective view of a side chassis and the moving means of the support structures of the sowing elements of said chassis.
Fig. 5 is a detail of Fig. 4 that shows the worm and the dragging device of the moving means of the elements of the second chassis.
Fig. 6 is a perspective view of the rear part of the central chassis and of the attaching struts between the sowing elements.
Fig. 7 shows a perspective view of the frontal part of the central chassis of Fig. 6.
Fig. 8 is a detail of Fig. 7 showing the support piece of the struts, and the worm and rotating nut of the worm that permits to move the support structure of the sowing element with respect to the struts.
Figs. 9, 10, 11, 12 and 13 show each, a plan view of the frame of Fig. 1 with the elements of the first central chassis and the two second side chassis aligned, keeping a distance between elements of 450 mm, 550 mm, 650 mm, 750 mm and 800 mm, respectively.

### DESCRIPTION OF A PREFERRED EMBODIMENT

The attached figures show an embodiment of the frame 1 of the present invention provided with a first central chassis 2 including a plurality of internal sowing elements 3, and two second side chassis 4 attached to the ends of said first central chassis 2, including a plurality of external sowing elements 5 and vertical moving means of said sowing elements 5.

In the described embodiment, the vertical moving means of the external sowing elements 5 are configured by a hinged parallelogram mechanism 6 that permits to move vertically the elements 5 from an upper transportation position to a lower working position in which said external sowing elements 5 are aligned with respect to the sowing elements 3 of the central chassis 2.

The central chassis 2 is horizontally extended from a transportation position in which all its elements 3 are placed at the central part of the frame 1, to a working position in which the same elements 3 are placed along the frame 1 keeping a preset distance between them according to the kind of sowing.

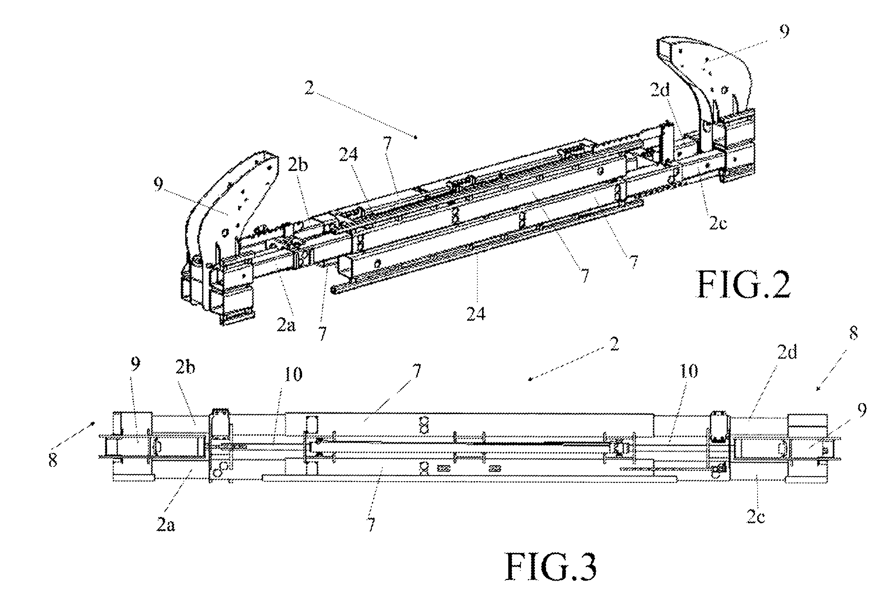

In the described embodiment, the central chassis 2 includes extended portions 2a, 2b, 2c, 2d that are configured by four telescopic arms 7 that are extended at the ends, determining each two telescopic arms 7 a fork 8 to which is attached a support structure 9 of the side chassis 4. These telescopic arms 7 are driven thanks to fluid-dynamic cylinder 10 provided between each two telescopic arms 7 determining a fork 8 (see Figs. 2 and 3).

As stated in the description of the invention, the claimed frame 1 has the particularity that the side chassis 4 are attached to the telescopic arms 7 of the central chassis 2, so that said side chassis 4 can be horizontally moved with the telescopic arms 7 to adapt the position of its elements 5 to the kind of sowing.

Thanks to this, the frame 1 is adapted to any kind of sowing, because the position of the external sowing elements 5 of the side chassis 4 can horizontally change extending more o less the telescopic arms 7 of the central chassis 2.

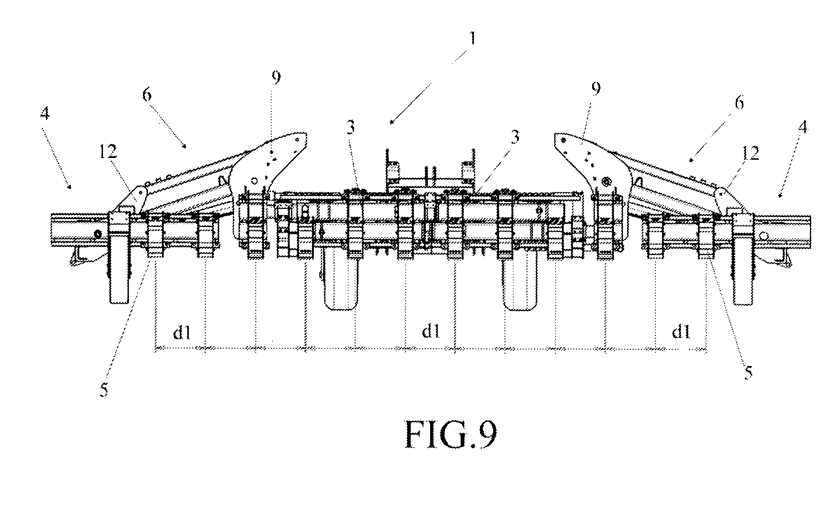

Figs. 9-13 show plan views of the frame 1 with the sowing elements 3 of the central chassis 2 and the elements 5 of the side chassis 4 aligned, keeping a distance between elements very different that is adapted to any kind of seed. For example:
- in Fig. 9, the side chassis 4 have been moved horizontally with the telescopic arms 7 to keep a distance "d1" between elements of 450 mm.

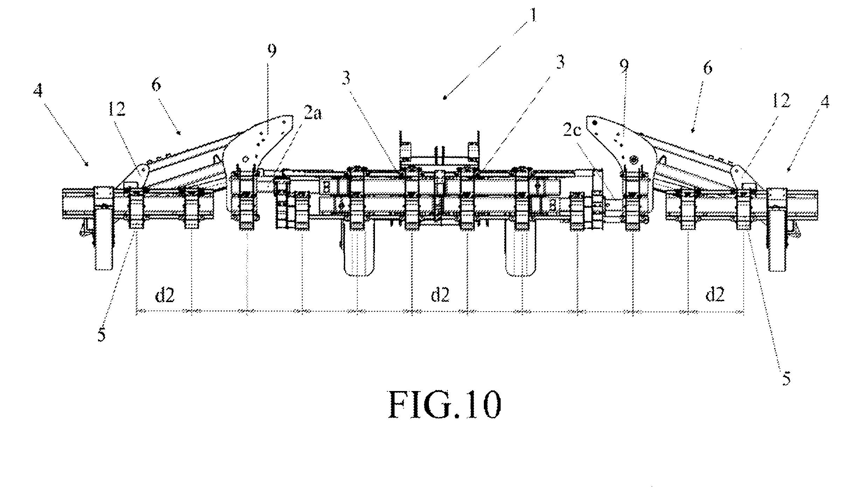

- in Fig. 10, the side chassis 4 have been moved horizontally with the telescopic arms 7 to keep a distance "d2" between elements of 550 mm.

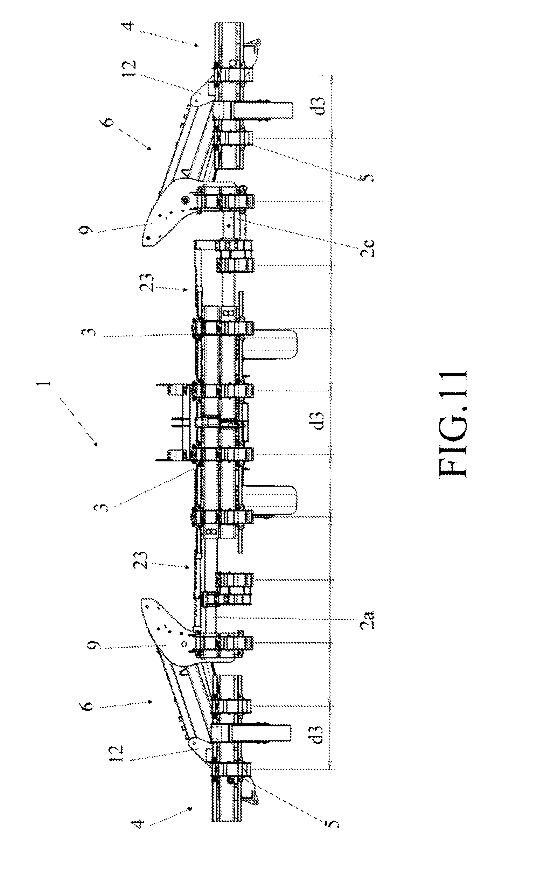

- in Fig. 11, the side chassis 4 have been moved horizontally with the telescopic arms 7 to keep a distance "d3" between elements of 650 mm.

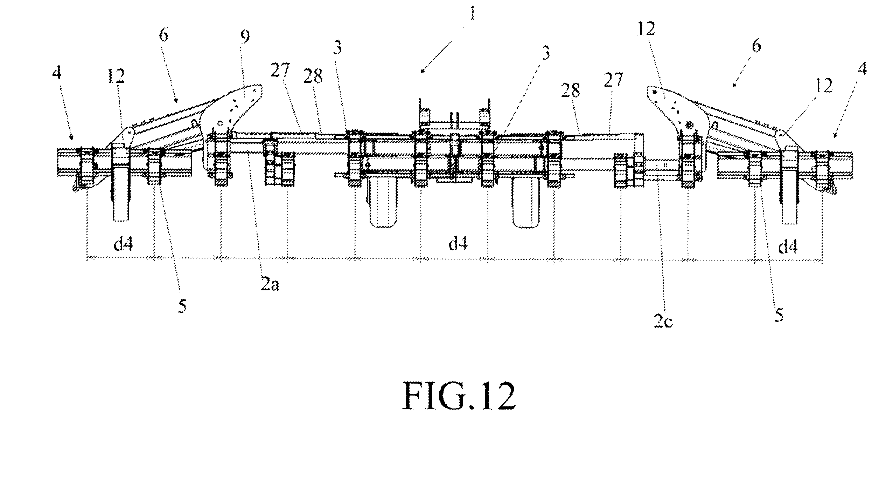

- in Fig. 12, the side chassis 4 have been moved horizontally with the telescopic arms 7 to keep a distance "d4" between elements of 750 mm.

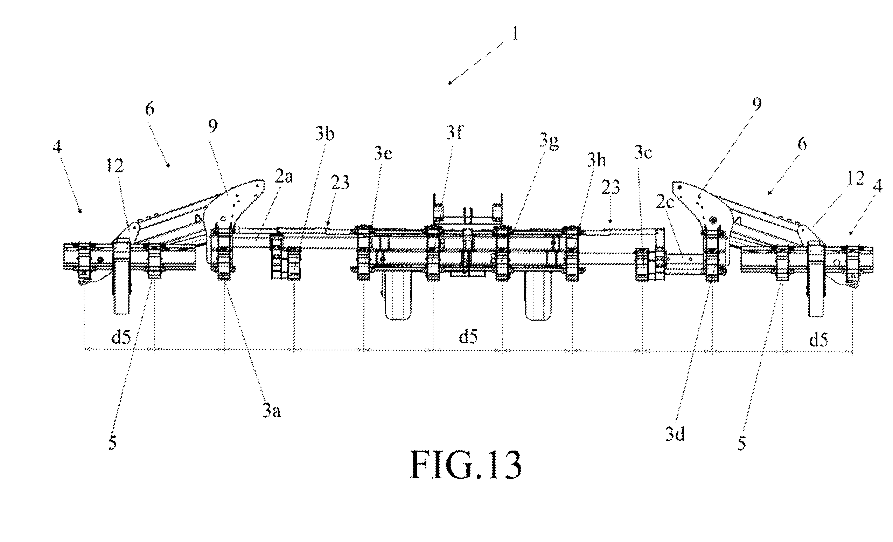

- in Fig. 13, the side chassis 4 have been moved horizontally with the telescopic arms 7 to keep a distance "d5" between elements of 850 mm.

Back to Figs. 2 and 3, reference is made now to the support structures 9 of the side chassis 4 that are attached integral with the ends of the telescopic arms 7 that determine the forks 8. These structures 9 provide suitable pivoting points for the hinged parallelogram mechanism 6 that moves vertically the sowing elements 5 of the side chassis 4.

In the described embodiment, each parallelogram mechanism 6 includes a first arm 11 hinged at an end of the support structure 9 and at the other end to a support piece 12 of the elements 5, a fluid-dynamic cylinder 13 that drives said arm 11, and a second arm 14 hinged at an end to the same support structure 9 and at the other end to said same support piece 12 of the elements 5. This second arm 14 permits to keep fixed the relative position of the piece 12 with respect to the sowing elements 5 during the movement, so that said elements 5 can be vertically moved keeping their horizontal position.

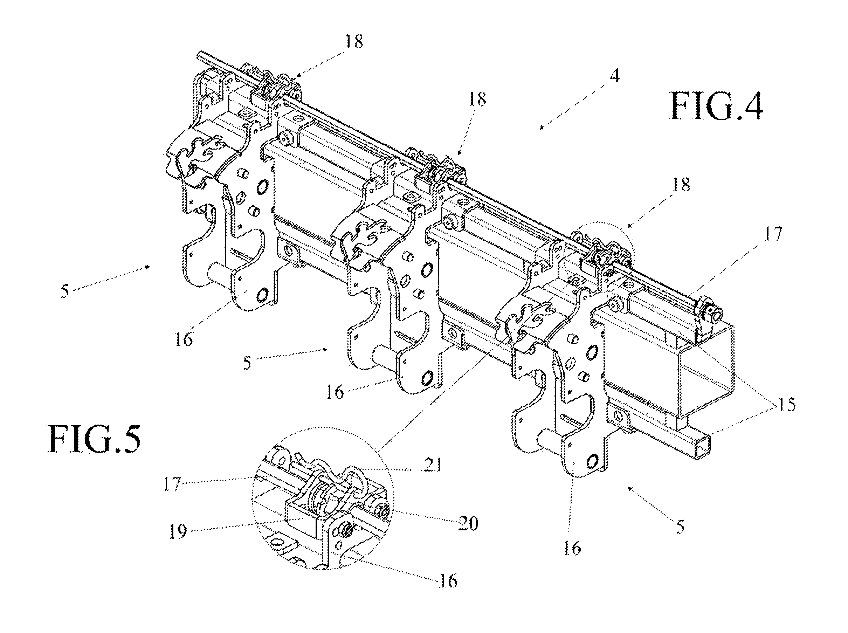

Fig. 4 shows a perspective view of a second side chassis 4 in which are shown the guides 15 on which the support structures 16 of the sowing elements 5 are mounted.

In the described embodiment, the second side chassis 4 includes means for moving the support structures 16 of the elements 5 along the guides 15. This means are configured by a worm 17 associated to the guides 15 that is provided with a plurality of dragging devices 18 of the support structures 16. Thanks to this, the elements 5 can be moved easily to fix a distance between them according to the kind of sowing.

Fig. 5 shows a detail of a dragging device 18 of a support structure 16 of a sowing element 5, including a dragging piece 19 integrally attached to said structure 16 and movably mounted along the worm 17. Said device 18 also includes a dragging nut 20 of said piece 19, which is fitted with the worm 17, and a locking pin 21 associated with said dragging piece 19 to prevent the integral rotation of the nut 20 with the worm 17, and to permit the horizontal movement of the nut 20 and the piece 19 when the worm 17 is driven by a rotation nut 22.

In the locking position of the pin 21 shown in Fig. 5, the dragging nut 20 cannot rotate integrally with the worm 17, so that the driving of the worm 17 horizontally moves the dragging nut 20 of the piece 19 integral with the structure 16 of the element 5 and, with it, the movement of the support structure 16 of the element 5 along the guides 15.

As stated previously, the sowing elements 3 of the central chassis 2 are susceptible of being placed along said chassis 2 keeping a preset distance between them. To this end, a plurality of attaching struts 23 among all the elements 3 is provided, which are associated to the telescopic arms 7 of the central chassis 2 to be driven by said same chassis 2.

In the described embodiment, the struts 23 are driven by two sowing elements 3a, 3b that are placed integrally attached to the ends of the telescopic arms 7. Therefore, when the telescopic arms 7 are opened or closed, the struts 23 are driven by said elements 3a, 3b, permitting the horizontal movement of the rest of sowing elements 3.

As it can be seen e.g. in Fig. 12, the central chassis 2 includes eight sowing elements 3, from which, four 3a, 3b, 3c, 3d are integrally attached to the telescopic arms 7, and other four 3e, 3f, 3g, 3h are placed at the fixed portions of the central chassis 2 on guides 24 in which the support structures 25 of said elements 3e, 3f, 3g, 3h are mounted.

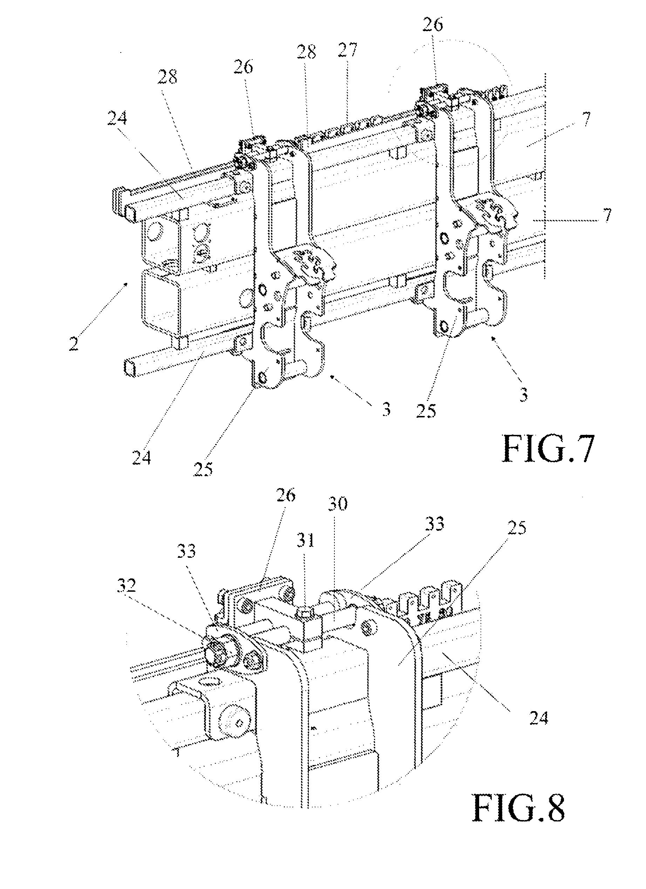

Fig. 7 shows a detail of the fixed portions of the central chassis 2 wherein the guides 24 on which the elements 3e, 3f, 3g, 3h move can be seen, and also support pieces 26 of the struts 23 that are attached to the support structures 25 of the elements 3e, 3f, 3g, 3h.

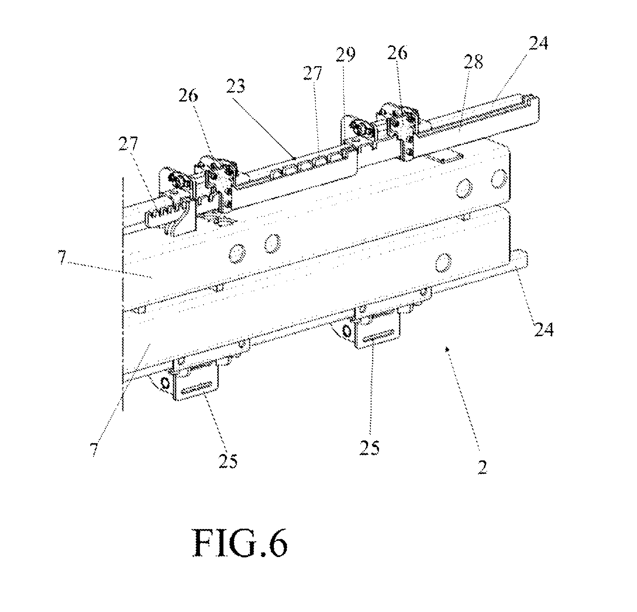

In the described embodiment, the attaching struts 23 between elements are each constituted by a female rod 27 movable inside a male rod 28 of an adjacent sowing element 3, and a stop element 29 for the female rod 27 associated with the male rod 28 for extending said female rod 27 a preset distance according to the kind of sowing. In Fig. 6 a detail of the female 27 and male 28 rods of the struts 23 is shown, that are attached to a support piece 26 of said struts 23.

As described in the description of the invention, thanks to the male/female configuration of the struts 23 and to the fact that said struts 23 are mounted on one support piece 26 that is attached to the support structure 25 of the elements 3, the struts 23 can withstand the thrust of the fluid-dynamic cylinder 10 that extends the telescopic arms 7, so it is not necessary to provide additional struts for the central chassis 2 to withstand this thrust .

Fig. 8 shows a detail of a support piece 26 of the struts 23 that is attached to a support structure 25 of an element 3e, 3f, 3g, 3h, through a worm 30 and a tightening nut 31. This worm 30 is susceptible of moving inside a hole provided in this piece 26 when said worm 30 is driven by a rotating nut 32 and said tightening nut 31 is loosened.

The worm 30 is integrally attached to the support structure 25 through side plates 33. Therefore, the support structure 25 of an element 3e, 3f, 3g, 3h can be moved when the worm 30 is driven by said rotation nut 32.

This mechanism has the advantage that permits to move the sowing elements of the fixed portions of the central chassis 2 with respect to the struts 23 to set the distance between elements 3e, 3f, 3g, 3h, once these elements have been moved by the struts 23.

Even though a specific embodiment of the present invention has been described and shown, it is apparent for a person skilled in the art can introduce variants and modifications, or substitute the details for other technically equivalent ones, without departing from the scope of protection defined by the attached claims.

E.g. even though reference is made in the present specification to a central chassis 2 provided with four telescopic arms 7 that are extended at the ends, determining each two telescopic arms 7 a fork 8 to which is attached a support structure 9 of the side chassis 4, the same central chassis 2 could be constituted e.g. only by two telescopic arms 7 reinforced to attach at their ends said support structures 9 of the side chassis 4. In the same way, even though reference is made to a preferred embodiment of a frame 1 including a central chassis 2 with eight sowing elements 3 and two side chassis 4 with two sowing elements 3 each, the same frame 1 could include a central chassis 2 and one or more side chassis 4 with a different number of sowing elements 3.

## Claims

1. Frame (1) for a variable pitch sowing machine comprising a first chassis (2) provided with a first plurality of sowing elements (3), said first chassis (2) including at least one portion (2a, 2b, 2c, 2d) horizontally extensible from a transporting position to a working position, said frame (1) comprising at least a second chassis (4) provided with a second plurality of sowing elements (5) and means (6) for vertically moving said sowing elements from an upper transporting position to a lower working position in which the sowing elements (5) of said second chassis (4) are placed aligned with respect to the sowing elements (3) of the first chassis (2), **characterized in that** said second chassis (4) is attached to the extensible portion (2a, 2b, 2c. 2d) of said first chassis (2), so that said second chassis (4) can be horizontally moved with said extensible portion (2a, 2b, 2c, 2d) to adapt the position of its elements to the kind of sowing.

2. Frame according to claim 1, comprising a support structure (9) of said second chassis (4) associated to said extensible portion (2a, 2b, 2c, 2d), said vertical moving means (6) being hinged to said support structure (9).

3. Frame according to claim 2, wherein said vertical moving means of the sowing elements comprise a hinged parallelogram mechanism (6) comprising a first arm (11) hinged at an end to said support structure (9) and at the other end to a support piece (12) of the elements (5), means (13) for driving said arm (11), and a second arm (14) hinged at an end to said support structure (9) and at the other end to said same support piece (12) of the elements (5), said second arm (14) permitting to keep fixed the relative position of said support piece (12) with respect to the sowing elements (5) during the movement of said first arm (11), so that said sowing elements (5) can be vertically moved keeping their horizontal position.

4. Frame according to anyone of the previous claims, wherein said frame (1) includes a first central chassis (2) provided with at least two extensible portions (2a, 2b, 2c, 2d), and two second side chassis (4) each attached to one extensible portion (2a, 2b, 2c, 2d) of an end of said central chassis (2), said central chassis (2) including at least eight sowing elements (3) and said side chassis (4) at least two sowing elements (5) each.

5. Frame according to anyone of the previous claims, wherein said first chassis (2) comprises a pair of extensible portions (2a, 2b) mounted on an end of said chassis (2), said two portions (2a, 2b) determining a fork (8) to which a support structure (9) of the second chassis (4) is attached.

6. Frame according to claim 5, comprising a first pair of extensible portions (2a, 2b) mounted at an end of a first central chassis (2) to hold as a fork (8) a support structure (9) of a second side chassis (4), and a second pair of extensible portions (2c, 2d) mounted at the other end of the first central chassis (2) as a fork (8) to hold a support structure (9) of other second side chassis (4).

7. Frame according to anyone of the previous claims, wherein each of said extensible portions (2a, 2b, 2c, 2d) comprises a telescopic arm (7) of said first chassis (2).

8. Frame according to anyone of the previous claims, wherein said second chassis (4) includes at least a guide (15) on which a plurality of support structures (16) of said sowing elements (5) are mounted, and moving means of said support structures (16) along said guide (15), said moving means including a worm (17) associated to the guide (15) that is provided with a plurality of dragging devices (18) of said support structures (16).

9. Frame according to claim 8, wherein said dragging devices (18) comprise, for each of said sowing elements, a dragging piece (19) integrally attached to the support structure (16) of the sowing element (5) and mounted movable along the worm (17), a dragging nut (20) of said piece that is fitted with the worm (17), and locking means (21) for said dragging nut (20) to permit the horizontal movement of said nut (20) and said piece (19) when the worm is driven when the nut (20) is locked.

10. Frame according to claim 9, wherein said locking means includes a pin (21) associated with said dragging piece (19) to prevent the integral rotation of the nut (20) with the worm (17).

11. Frame according to anyone of the previous claims, wherein said first chassis (2) comprises at least one guide (24) on which a plurality of support structures (25) of sowing elements (3e, 3f, 3g, 3h) are mounted, and moving means of said support structures (25) along said guide (24), said moving means including a plurality of attaching struts (23) between elements (3), each of said sowing elements (3) comprising a support piece (26) of said struts (23) that is attached to the support structure (25) of said element (3), said struts (23) being associated to at least an extensible portion (2a, 2b, 2c. 2d) of said chassis (2) to be driven by said same chassis (2).

12. Frame according to anyone of claims 11, wherein the attaching struts (23) between elements (3) include each a female rod (27) movable inside a male rod (28) of an adjacent sowing element (3), and a stop element (29) of the female rod (27) associated with the male rod (28) to extend said female rod (27) a preset distance according to the kind of sowing.

13. Frame according to anyone of claims 11 to 12, wherein said first chassis (2) comprises for each element (3e, 3f, 3g, 3h) that is mounted on the guide (24), a worm (30) to which the support piece (26) of the struts (23) is attached by a tightening nut (31), said worm (30) being integrally attached to the support structure (25) of the sowing element (3e, 3f. 3g, 3h), said chassis (2) including a rotation nut (32) of said worm (30), being susceptible of moving the worm (30) and the support structure (25) of each element (3e, 3f, 3g, 3h) with respect to the support piece (26) of the struts (23) when said rotation nut (32) drives the worm (30) and said tightening nut (31) is loosened.

14. Variable pitch sowing machine including a frame according to anyone of the previous claims.

## Patentansprüche

1. Rahmen (1) für eine abstandsverstellbare Sämaschine, aufweisend ein erstes Chassis (2), das mit einer ersten Vielzahl von Säelementen (3) versehen ist, wobei das erste Chassis (2) wenigstens einen Abschnitt (2a, 2b, 2c, 2d) umfasst, der von einer Transportposition in eine Arbeitsposition horizontal ausziehbar ist, und wobei der Rahmen (1) wenigstens ein zweites Chassis (4) aufweist, das mit einer zweiten Vielzahl von Säelementen (5) und einem Mittel (6) zum vertikalen Verstellen der Säelemente von einer oberen Transportposition in eine untere Arbeitsposition, in der die Säelemente (5) des zweiten Chassis (4) bezüglich der Säelemente (3) des ersten Chassis (2) ausgerichtet angeordnet sind, versehen ist, **dadurch gekennzeichnet, dass** das zweite Chassis (4) an dem ausziehbaren Abschnitt (2a, 2b, 2c, 2d) des ersten Chassis (2) befestigt ist, so dass das zweite Chassis (4) mit dem ausziehbaren Abschnitt (2a, 2b, 2c, 2d) horizontal bewegt werden kann, um die Position dessen Elemente der Säart anzupassen.

2. Rahmen nach Anspruch 1, aufweisend eine Tragstruktur (9) des zweiten Chassis (4), die dem ausziehbaren Abschnitt (2a, 2b, 2c, 2d) zugeordnet ist, wobei das vertikale Bewegungsmittel (6) an der Tragstruktur (9) schwenkbeweglich befestigt ist.

3. Rahmen nach Anspruch 2, bei dem das vertikale Bewegungsmittel der Säelemente einen schwenkbeweglich angebrachten Parallelogramm-Mechanismus (6) aufweist, der einen ersten Arm (11), der mit einem Ende an der Tragstruktur (9) und mit dem anderen Ende an einem Tragteil (12) der Elemente (5) schwenkbeweglich befestigt ist, ein Mittel (13) zum Steuern des Arms (11), und einen zweiten Arm (14), der mit einem Ende an der Tragstruktur (9) und mit dem anderen Ende an dem selben Tragteil (12) der Elemente (5) schwenkbeweglich befestigt ist, aufweist, wobei der zweite Arm (14) es ermöglicht, dass die relative Position des Tragteils (12) bezüglich der Säelemente (5) während der Bewegung des ersten Arms (11) beibehalten wird, so dass die Säelemente (5) vertikal bewegt werden können während sie ihre horizontale Position beibehalten.

4. Rahmen nach einem der vorhergehenden Ansprüche, wobei der Rahmen (1) ein erstes zentrales Chassis (2), das mit wenigstens zwei ausziehbaren Abschnitten (2a, 2b, 2c, 2d) versehen ist, und zwei zweite Seitenchassis (4), die jeweils an einem ausziehbaren Abschnitt (2a, 2b, 2c, 2d) eines Endes des zentralen Chassis (2) befestigt sind, umfasst, wobei das zentrale Chassis (2) wenigstens acht Säelemente (3) umfasst und die Seitenchassis (4) wenigstens jeweils zwei Säelemente (5) umfassen.

5. Rahmen nach einem der vorhergehenden Ansprüche, bei dem das erste Chassis (2) ein Paar ausziehbare Abschnitte (2a, 2b) aufweist, die an einem Ende des Chassis (2) angebracht sind, wobei die beiden Abschnitte (2a, 2b) eine Gabel (8) bilden, an der eine Tragstruktur (9) des zweiten Chassis (4) angebracht ist.

6. Rahmen nach Anspruch 5, aufweisend ein erstes Paar ausziehbarer Abschnitte (2a, 2b), das an einem Ende eines ersten zentralen Chassis (2) angebracht ist, um als eine Gabel (8) eine Tragstruktur (9) eines zweiten Seitenchassis (4) zu halten, und ein zweites Paar ausziehbarer Abschnitte (2c, 2d), die an dem anderen Ende des ersten zentralen Chassis (2) als eine Gabel (8) angebracht sind, um eine Tragstruktur (9) des anderen zweiten Chassis (4) zu halten.

7. Rahmen nach einem der vorhergehenden Ansprüche, bei dem jeder der ausziehbaren Abschnitte (2a, 2b, 2c, 2d) einen Teleskoparm (7) des ersten Chassis (2) aufweist.

8. Rahmen nach einem der vorhergehenden Ansprüche, bei dem das zweite Chassis (4) wenigstens eine Führung (15), an der eine Vielzahl von Tragstrukturen (16) der Säelemente (5) angebracht ist, und ein Bewegungsmittel der Tragstrukturen (16) entlang der Führung (15) umfasst, wobei das Bewegungsmittel eine Schnecke (17) umfasst, die der Führung (15), die mit einer Vielzahl von Mitnehmervorrichtungen (18) der Tragstrukturen (16) versehen ist, zugeordnet ist.

9. Rahmen nach Anspruch 8, bei dem die Mitnehmervorrichtungen (18) für jedes der Säelemente ein Mitnehmerelement (19), das an der Tragstruktur (16) des Säelements (5) integral angebracht und entlang der Schnecke (17) beweglich befestigt ist, eine Mitnehmermutter (20) des Mitnehmerelements, die auf die Schnecke (17) aufgesetzt ist, und ein Arretiermittel (21) für die Mitnehmermutter (20), um die horizontale Bewegung der Mutter (20) und des Mitnehmerelements (19) zu ermöglichen, wenn die Schnecke angetrieben wird und die Mutter (20) arretiert ist, aufweist.

10. Rahmen nach Anspruch 9, bei dem das Arretiermittel einen Stift (21) umfasst, der dem Mitnehmerelement (19) zugeordnet ist, um die Drehung der Mutter (20) zusammen mit der Schnecke (17) zu verhindern.

11. Rahmen nach einem der vorhergehenden Ansprüche, bei dem das erste Chassis (2) wenigstens eine Führung (24), an der eine Vielzahl von Tragstrukturen (25) von Säelementen (3e, 3f, 3g, 3h) angebracht ist, und ein Bewegungsmittel der Tragstrukturen (25) entlang der Führung (24) aufweist, wobei das Bewegungsmittel eine Vielzahl von Befestigungsstreben (23) zwischen den Elementen (3) umfasst, wobei jedes der Säelemente (3) ein Tragteil (26) der Streben (23) aufweist, das an der Tragstruktur (25) des Elements (3) angebracht ist, und wobei die Streben (23) wenigstens einem ausziehbaren Abschnitt (2a, 2b, 2c, 2d) des Chassis (2) zugeordnet sind, um von demselben Chassis (2) angetrieben zu werden.

12. Rahmen nach Anspruch 11, bei dem die Befestigungsstreben (23) zwischen den Elementen (3) jeweils eine Aufnahme-Stange (27), die in einer Einsteck-Stange (28) eines benachbarten Säelements (3) bewegbar ist, und ein Anschlagelement (29) der Einsteck-Stange (27), das der Aufnahme-Stange (28) zugeordnet ist, um die Aufnahme-Stange (27) um einen voreingestellten Abstand entsprechend der Säart auszufahren, umfassen.

13. Rahmen nach einem der Ansprüche 11 bis 12, bei dem das erste Chassis (2) für jedes Element (3e, 3f, 3g, 3h), das an der Führung (24) angebracht ist, eine Schnecke (30) aufweist, an der das Tragstück (26) der Streben (23) durch eine Festziehmutter (31) befestigt ist, wobei die Schnecke (30) an der Tragstruktur (25) des Säelements (3e, 3f, 3g, 3h) integral befestigt ist, und wobei das Chassis (2) eine Drehmutter (32) der Schnecke (30) umfasst, die die Schnecke (30) und die Tragstruktur (25) eines jeden Elementes (3e, 3f, 3g, 3h) bezüglich des Tragstücks (26) der Streben (23) bewegen kann, wenn die Drehmutter (32) die Schnecke (30) antreibt und die Festziehmutter (31) gelöst ist.

14. Abstandsverstellbare Sämaschine mit einem Rahmen nach einem der vorhergehenden Ansprüche.

## Revendications

1. Bâti (1) pour un semoir à pas variable comprenant un premier châssis (2) pourvu d'une première pluralité d'éléments d'ensemencement (3), ledit premier châssis (2) incluant au moins une partie (2a, 2b, 2c, 2d) extensible horizontalement d'une position de transport à une position de travail, ledit bâti (1) comprenant au moins un second châssis (4) pourvu d'une seconde pluralité d'éléments d'ensemencement (5) et de moyens (6) pour déplacer verticalement lesdits éléments d'ensemencement d'une position de transport supérieure à une position de travail inférieure dans laquelle les éléments d'ensemencement (5) dudit second châssis (4) sont placés en étant alignés par rapport aux éléments d'ensemencement (3) du premier châssis (2), **caractérisé en ce que** ledit second châssis (4) est fixé à la partie extensible (2a, 2b, 2c, 2d) dudit premier châssis (2), de sorte que ledit second châssis (4) peut être déplacé horizontalement avec ladite partie extensible (2a, 2b, 2c, 2d) pour adapter la position de ses éléments au type d'ensemencement.

2. Bâti selon la revendication 1, comprenant une structure de support (9) dudit second châssis (4) associée à ladite partie extensible (2a, 2b, 2c, 2d), lesdits moyens de déplacement vertical (6) étant articulés sur ladite structure de support (9).

3. Bâti selon la revendication 2, dans lequel lesdits moyens de déplacement vertical des éléments d'ensemencement comprennent un mécanisme à parallélogramme articulé (6) comprenant un premier bras (11) articulé au niveau d'une extrémité sur ladite structure de support (9) et au niveau de l'autre extrémité sur une pièce de support (12) des éléments (5), des moyens (13) pour entraîner ledit bras (11), et un second bras (14) articulé au niveau d'une extrémité sur ladite structure de support (9) et au niveau de l'autre extrémité sur cette même pièce de support (12) des éléments (5), ledit second bras (14) permettant de maintenir fixe la position relative de ladite pièce de support (12) par rapport aux éléments d'ensemencement (5) pendant le mouvement dudit premier bras (11), de sorte que lesdits éléments d'ensemencement (5) puissent être déplacés verticalement en conservant leur position horizontale.

4. Bâti selon l'une quelconque des revendications précédentes, dans lequel ledit bâti (1) inclut un premier châssis central (2) pourvu d'au moins deux parties extensibles (2a, 2b, 2c, 2d), et deux seconds châssis latéraux (4) fixés chacun sur une partie extensible (2a, 2b, 2c, 2d) d'une extrémité dudit châssis central (2), ledit châssis central (2) incluant au moins huit éléments d'ensemencement (3) et lesdits châssis latéraux (4) au moins deux éléments d'ensemencement (5) chacun.

5. Bâti selon l'une quelconque des revendications précédentes, dans lequel ledit premier châssis (2) comprend une paire de parties extensibles (2a, 2b) montées sur une extrémité dudit châssis (2), lesdites deux parties (2a, 2b) définissant une fourche (8) sur laquelle est fixée une structure de support (9) du second châssis (4).

6. Bâti selon la revendication 5, comprenant une première paire de parties extensibles (2a, 2b) montées au niveau d'une extrémité d'un premier châssis central (2) pour maintenir sous la forme d'une fourche (8) une structure de support (9) d'un second châssis latéral (4), et une seconde paire de parties extensibles (2c, 2d) montées au niveau de l'autre extrémité du premier châssis central (2) sous la forme d'une fourche (8) pour maintenir une structure de support (9) de l'autre second châssis latéral (4).

7. Bâti selon l'une quelconque des revendications précédentes, dans lequel chacune desdites parties extensibles (2a, 2b, 2c, 2d) comprend un bras télescopique (7) dudit premier châssis (2).

8. Bâti selon l'une quelconque des revendications précédentes, dans lequel ledit second châssis (4) inclut au moins un guide (15) sur lequel une pluralité de structures de support (16) desdits éléments d'ensemencement (5) sont montées, et des moyens de déplacement desdites structures de support (16) le long dudit guide (15), lesdits moyens de déplacement incluant une vis sans fin (17) associée au guide (15) qui est pourvue d'une pluralité de dispositifs d'entraînement (18) desdites structures de support (16).

9. Bâti selon la revendication 8, dans lequel lesdits dispositifs d'entraînement (18) comprennent, pour chacun desdits éléments d'ensemencement, une pièce d'entraînement (19) fixée d'un seul tenant à la structure de support (16) de l'élément d'ensemencement (5) et montée en étant mobile le long de la vis sans fin (17), un écrou d'entraînement (20) de ladite pièce qui est monté sur la vis sans fin (17), et des moyens de blocage (21) pour ledit écrou d'entraînement (20) pour permettre le mouvement horizontal dudit écrou (20) et de ladite pièce (19) quand la vis sans fin est entraînée quand l'écrou (20) est bloqué.

10. Bâti selon la revendication 9, dans lequel lesdits moyens de blocage incluent une goupille (21) associée à ladite pièce d'entraînement (19) pour empêcher la rotation intégrale de l'écrou (20) avec la vis sans fin (17).

11. Bâti selon l'une quelconque des revendications précédentes, dans lequel ledit premier châssis (2) comprend au moins un guide (24) sur lequel une pluralité de structures de support (25) d'éléments d'ensemencement (3e, 3f, 3g, 3h) sont montées, et des moyens de déplacement desdites structures de support (25) le long dudit guide (24), lesdits moyens de déplacement incluant une pluralité de tirants de fixation (23) entre les éléments (3), chacun desdits éléments d'ensemencement (3) comprenant une pièce de support (26) desdits tirants (23) qui est fixée à la structure de support (25) dudit élément (3), lesdits tirants (23) étant associés à au moins une partie extensible (2a, 2b, 2c, 2d) dudit châssis (2) pour être entraînée par ce même châssis (2).

12. Bâti selon l'une quelconque des revendications 11, dans lequel les tirants de fixation (23) entre les éléments (3) incluent chacun une tige femelle (27) mobile à l'intérieur d'une tige mâle (28) d'un élément d'ensemencement (3) adjacent, et un élément de butée (29) de la tige femelle (27) associé à la tige mâle (28) pour étendre ladite tige femelle (27) d'une distance prédéfinie en fonction du type d'ensemencement.

13. Bâti selon l'une quelconque des revendications 11 à 12, dans lequel ledit premier châssis (2) comprend pour chaque élément (3e, 3f, 3g, 3h) qui est monté sur le guide (24), une vis sans fin (30) à laquelle la pièce de support (26) des tirants (23) est fixée par un écrou de serrage (31), ladite vis sans fin (30) étant fixée d'un seul tenant à la structure de support (25) de l'élément d'ensemencement (3e, 3f, 3g, 3h), ledit châssis (2) incluant un écrou de rotation (32) de ladite vis sans fin (30), apte à déplacer la vis sans fin (30) et la structure de support (25) de chaque élément (3e, 3f, 3g, 3h) par rapport à la pièce de support (26) des tirants (23) quand ledit écrou de rotation (32) entraîne la vis sans fin (30) et que ledit écrou de serrage (31) est desserré.

14. Semoir à pas variable incluant un bâti selon l'une quelconque des revendications précédentes.
